# EUROPEAN PATENT SPECIFICATION

(11) **EP 1 518 754 B1**
(45) Date of publication and mention of the grant of the patent: **11.12.2013**
(21) Application number: 04380182.8
(22) Date of filing: 17.09.2004
(51) Int. Cl.: B60Q 1/30

(54) **Outside light indicator for a third brake light on automotive vehicles**
Äussere Lichtanzeige für eine dritte Bremsleuchte für Kraftfahrzeuge
Indicateur lumineux extérieur pour un troisième feu de stop de véhicule

(30) Priority: 24.09.2003 ES 200302148 U
(43) Date of publication of application: 30.03.2005
(73) Proprietor: Seat, S.A., 08040 Barcelona (ES)
(72) Inventor: Elvira Avila, Carlos, 08760 Martorell (Barcelona) (ES)
(74) Representative: Isern-Jara, Nuria

(56) References cited:
- EP-A2- 1 098 135
- FR-A3- 2 810 283
- US-A- 3 489 891
- US-A- 5 490 049
- US-A- 6 074 078
- US-A1- 2002 117 595

## Description

The present invention refers to an outside light indicator for a third brake light on automotive vehicles, comprising an elongated casing in which a lighting device and a red lens are arranged with the interposition of a seal between the casing and lens to prevent water and dust from entering.

This third brake light indicator traditionally includes screws, the purpose of which is to secure the position between the different components and their fixing to the sheet metal of the vehicle once the indicator is assembled therein. The indicator constitutes an assembly already preassembled or a finished part, made up of the aforementioned components, in which the casing and lens are usually previously joined by means of welding, gluing or by any other suitable means. In summary, no matter what the constitution of the indicator may be, a series of operations must be carried out during the assembly thereof to join the different parts together, by means of additional operations and elements, with the cost this represents. In the same manner, it is necessary to have additional holding means to assemble the assembly in the sheet metal of the vehicle.

US 5490049 refers to a signalling light for a motor vehicle having a plurality of individual light-emitting diodes co-operating with optical arrangements, a common inner plate, a common outer plate, and closure cover situated outside the outer plate, a plurality of elongate printed circuits on which the respective light-emitting diodes are mounted and wherein the inner plate has means for mounting the printed circuits parallel to one another to provide for a block of signalling lights

The object of the present invention is to eliminate the drawbacks set forth by means of a light indicator constituted such that both the assembly of the different components and the fixing of the assembly to the sheet metal of the vehicle are achieved without needing to incorporate additional holding elements or the corresponding operations.

In the indicator of the invention, the fixing means or system for fixing the components together and fixing the assembly to the sheet metal of the vehicle is incorporated or defined by the parts or components of the indicator, such that neither screws nor other additional elements are necessary for the assembly of the indicator and fixing thereof to the sheet metal of the vehicle, thus decreasing the number of components of the assembly and the necessary assembly operations. All this means considerable cost savings, both in materials and in assembly time. the casing has, said grooves being of a length exceeding the width of the pins. Both the pins and walls of the casing have anchors and guides which, when the pins are introduced through said grooves, define a preassembly position in which the lens is partially separated from the casing, but without the possibility of being accidentally separated therefrom, and a final assembly position in which the lens rests on the outline of the casing, compressing a seal. This second position is the one which serves for the assembly of the indicator on the vehicle and, in that position, the edge to the opening of the body sheet metal is pressed between the casing and the lens, compressing the seal.

Said first preassembly position, in which all the components of the indicator are coupled and partially fixed to one another, is reached when the pins of the lens are partially introduced through the grooves of the closed base of the casing, until a locking is achieved between facing anchors of the pins and walls of the casing. The second final assembly position is reached by wholly introducing the pins through the grooves of the closed base of the casing until the pin guides and casings are facing, and then longitudinally sliding the lens with regard to the casing until all the guides are completely coupled.

The indicator of the invention thus has an assembly and fixing system made up of a series of stops and guides carried out on the parts or components themselves of the indicator, specifically on the wall of the casing and on the pins of the lens which, with the assembly in the first preassembly position, can be assembled on the vehicle, in the corresponding opening of the sheet metal, by sliding the casing on the lens until reaching the stop in which the guides of both components are completely coupled, achieving that the assembly is fixed to the sheet metal, which remains compressed between the lens and the casing. In this manner, all the components of the assembly are assembled and the assembly fixed to the vehicle, and the seal fully assures the sealing as it is pressed between the lens and sheet metal.

With the indicator of the invention, accessibility to the assembly and disassembly is improved, given that one point of access is necessary for the sliding of the casing with regard to the lens when usually two points of access are necessary in the cases in which the indicator is screwed down.

In short, the advantages of the indicator of the invention are deduced from its constitution, which simplifies the assembly, both of the different components of the indicator to one another and of the assembly on the vehicle, all resulting in a saving of assembly times and in the cost of materials.

All the features set forth as well as others pertaining to the invention are set forth below in greater detail with the aid of the attached drawings in which a nonlimiting embodiment is shown.

In the drawings:
Figure 1 shows an exploded perspective view of the components of the indicator of the invention.
Figures 2 and 3 show two successive assembly positions to reach the first preassembly position.
Figure 4 shows a partial cross-sectional view of the indicator, taken along the IV-IV section line of Figure 3.
Figures 5, 6 and 7 show successive positions between the lens and casing to go from the preassembly position to the final assembly position.
Figure 8 shows a partial longitudinal sectional view of the indicator taken along the VIII-VIII section line of Figure 6.
Figure 9 shows a sectional view similar to Figure 8 taken along the IX-IX section line of Figure 7.
Figures 10 to 13 show schematic cross-sectional views of the assembly sequence for the indicator of the invention in the opening corresponding to the sheet metal of a vehicle.

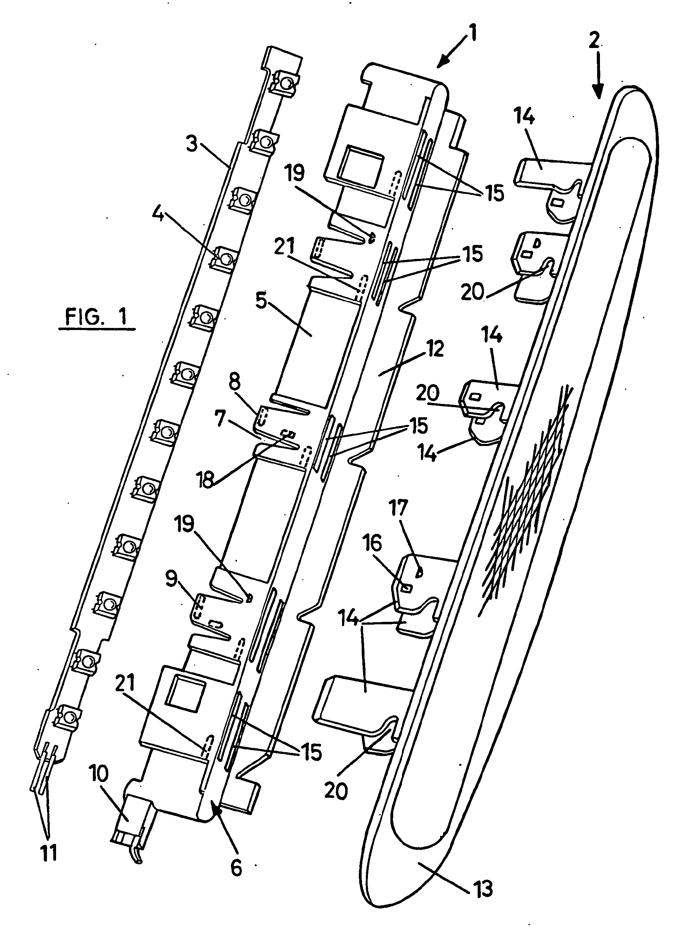

The indicator shown in Figure 1 is made up of a casing 1 with an elongated configuration, a red lens 2 and a strip 3 bearing a light assembly 4 constituting the lighting device.

The casing 1 is provided with a side wall which is open at one of its bases and closed at the opposite base, which is referenced with number 6. From the free edge, this wall has notches 7 defining intermediate portions 8 with a certain elastic deformation capacity. These pins have transverse ribs 9 on the inner surface which serve to retain the strip 3. Furthermore, the wall 5 of the casing has an end grooving 10 through which connection pins 11 of the strip 3 are introduced.

One of the longitudinal walls of the casing 1 extends, from the closed base 6, into a portion 12 on which the lens 2 will rest.

The lens 2 includes a plate 13 of an outline exceeding that of the casing 1. Pins 14 which can be introduced through grooves 15 which the closed base 6 of the casing 1 has, project from the inner surface of this plate, the grooves 15 having a length exceeding the width of the pins 14.

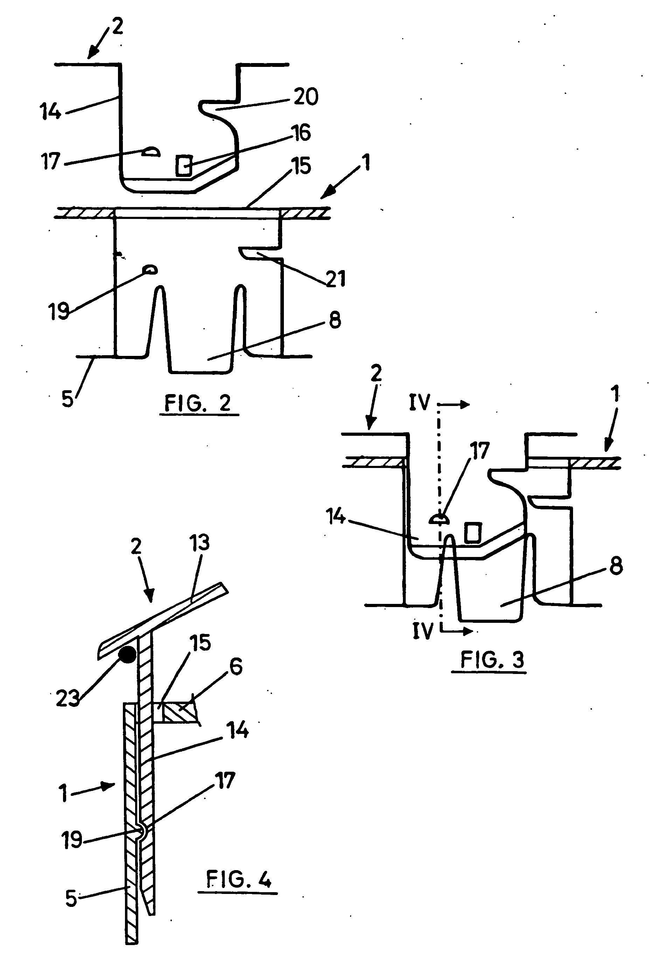

The pins 14 have small recesses or openings 16 or 17, whereas the longitudinal walls 5 of the casing have projections 18 and 19 which will be coupled in the recesses or openings 16 and 17 of the pins 14 to define locking positions. Furthermore, from one of their longitudinal edges, the pins 14 of the lens have grooves 20 that face and couple with longitudinal ribs 21 projecting from the inner surface of the longitudinal walls 5 of the casing 1, to constitute guides which collaborate with the aforementioned openings and projections in defining two relative positions between lens 2 and casing 1, a preassembly and another final assembly position, as will be set forth below in reference to Figures 2 to 9.

The assembly of the assembly of the indicator is achieved, on one hand, by coupling the strip 3 in the open base of the casing 1, partially introducing the longitudinal edges of said strip between the tabs 8 until overcoming the nerves 9 thereof which retain the strip in place, with the pins 11 introduced through the grooving 10 for the electrical connection.

Then the lens is assembled by introducing the pins 14 through the grooves 15, starting by facing the pins 14 to the grooves 15, as shown in Figure 2, and next introducing them until the recess 17 of the pins 14 is facing the projection 19 of the inner surface of the walls 5 of the casing 1, as shown in Figures 3 and 4, thus obtaining a first preassembly position in which the lens 2 is secured to the casing 1.

In Figure 4, it can be seen how plate 13 of the lens is of a larger outline than that of the casing 1, incorporating a seal 23 at its inner surface, around the pins 14.

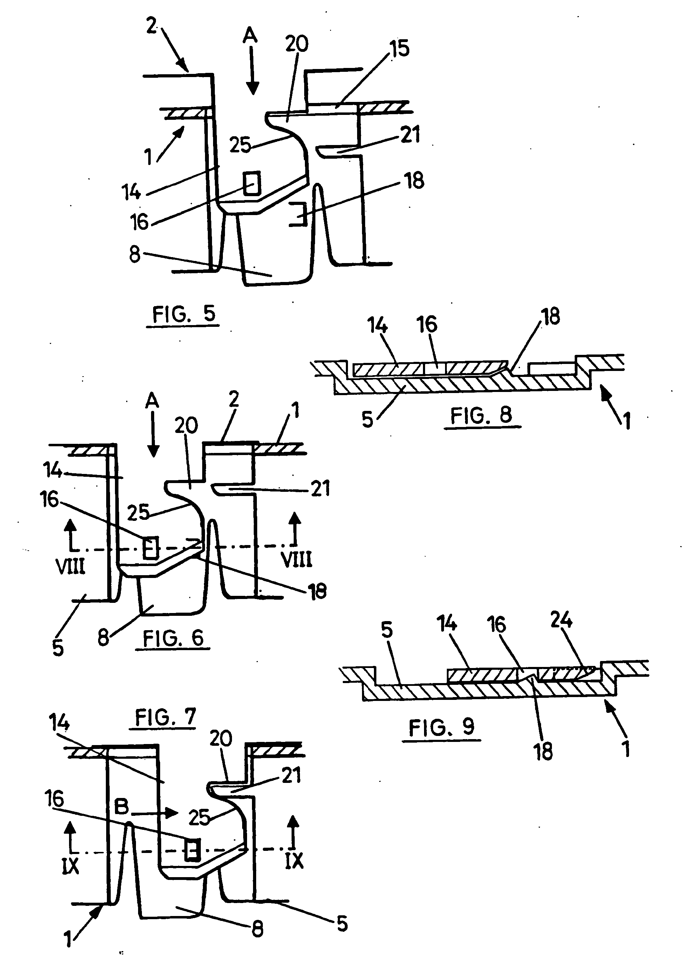

In the position described, the indicator constitutes a preassembled assembly, which can be easily handled for its assembly in the opening of the sheet metal of a vehicle, a situation in which a final assembly position, which is explained in detail in reference to Figures 5 to 9, will be reached.

Starting from the position of Figures 3 and 4, to reach the final assembly position, the lens 2 is pressed against the casing 1, as indicated with arrow A of Figure 5, whereby the anchor defined by recess 17 and projection 19 is able to be overcome, Figure 4, and introduction of the pins 14 through the grooves 15 continues until reaching the position of Figure 6, wherein the opening 16 of the pins 14 is located at the same height as the projection 18 projecting from the inner surface of the walls 5 of the casing, position in which the transverse grooves 20 of the pins 14 and the nerves 21 projecting from the inner surface of the walls 5 of the casing are facing one another. From this position and by means of a relative longitudinal movement between the casing 1 and the lens 2, as indicated with arrow B of Figure 7, it is achieved that the rib 21 is introduced in the groove 20, while at the same time the projection 18 is introduced in the opening 16, as shown in Figures 7 to 9, thus achieving a locking position in which the seal 23, Figure 4, is furthermore compressed between the plate 13 of the lens 2 and the base 6 of the casing 1.

As can better be seen in Figures 8 and 9, the pins 14 have a free transverse beveled edge 24 for facilitating its sliding on the projection 18, which also has an inclined leading surface, as is best seen in Figure 8, which facilitates the sliding of the pin 14 over the projection 18.

For a similar purpose, the grooves 20 have a curved lower edge 25 and the ribs 21 have a rounded edge which will facilitate the coupling operation for coupling both components to define guides leading to the final assembly position.

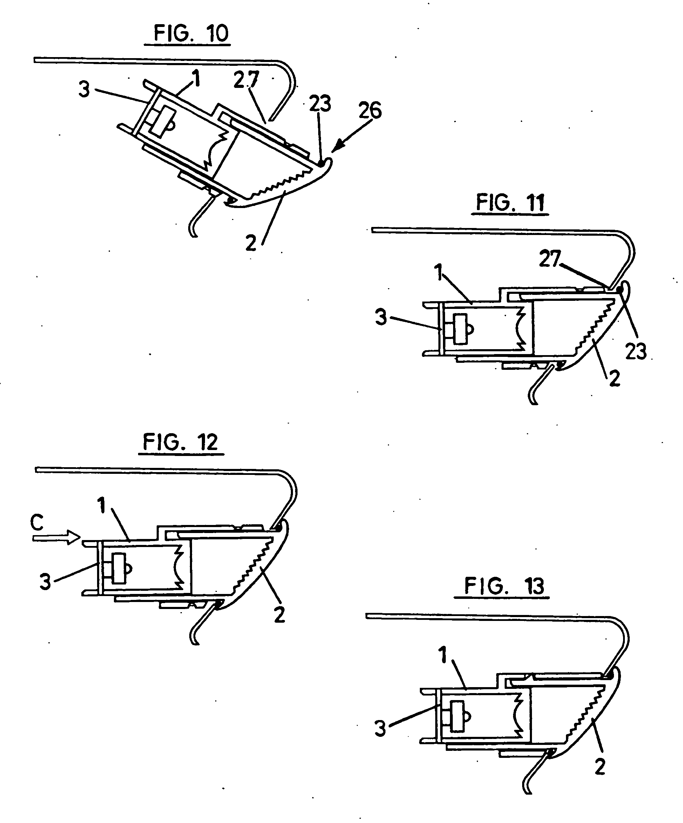

The final assembly position, described in reference to Figures 5 to 9, is carried out during the assembly of the indicator in the opening of the sheet metal of the vehicle, as described in reference to Figures 10 to 13.

Figure 10 shows the indicator in the preassembly position, with reference number 26, partially introduced through the opening 27 of the sheet metal of a vehicle. The indicator 26 is completely introduced in the opening 27, as shown in Figure 11, and from this position, externally holding the lens 2, it presses against the casing 1 in the direction of arrow C of Figure 12 until causing the complete introduction of the pins 14 in the grooves 15, which corresponds to the position of Figure 6. After this moment, the casing 1 will move longitudinally with regard to the lens 2 until reaching the position of Figures 7 and 9, in which the edge of the sheet metal bordering the opening 27 is compressed between the lens 2 and casing 1, the seal 23 preventing dust and water from entering also being compressed.

With the described constitution, it is possible to achieve arranging a light indicator, the components of which can occupy a first preassembly position, in which the lens and casing occupy the positions shown in Figures 3 and 4, and a final assembly position, in which the lens and casing are completely coupled and fixed to one another, compressing the edge of the sheet metal of the opening of the vehicle and the seal between them, and all this without the necessity of having to use auxiliary assembly and fixing elements.

## Claims

1. An outer light indicator for a third brake light in automotive vehicles, intended for being assembled in a rear opening of the body sheet metal, comprising an elongated casing (1) open at one of its bases and closed at the opposite base, wherein a strip (3) bearing a set of LEDS (4) is assembled through the open base, whereas the lens (2) is assembled on the closed base, and is of a larger outline than the casing and has, from the inner surface, a series of pins (14),
the outer light indicator being **characterized in that** the pins (14) are capable of being introduced through facing grooves (15) which the closed base (6) of the casing (1) has, said grooves being of a length exceeding the width of the pins; said pins (14) and the longitudinal walls (5) of the casing having at least two pairs of anchors (17, 19 and 16, 18) and one pair of guides (20, 21), a first anchor pair (17, 19) participating to the preassembly position in which the lens (2) is partially separated from the casing, and a second anchor pair (16, 18) and the guides (20, 21) participating to the final assembly position on the vehicle, in which the edge of the opening of the body sheet metal on which it is assembled is intended to be pressed between the casing and lens;
the first preassembly position being reached by the partial introduction of the pins (14) of the lens through the grooves (15) of the closed base of the casing, until achieving a lock between facing the first pair anchors (17, 19) of the pins and wall of the casing, and the
final anchor position by the complete introduction of the pins through the grooves of the closed base of the casing, until the pin and casing guides (20, 21) are facing, followed by the longitudinal sliding between the lens and casing, until reaching complete coupling between both guides, while at the same time achieving a lock between facing anchors of the second anchor pair (16, 18).

2. An indicator according to claim 1, **characterized in that** said anchors consist of facing projections (18, 19) and recesses or openings (16, 17) which pins (14) of the lens (2) and walls (5) of the casing (1) at their facing surfaces have, being located at coinciding points when said lens and casing reach their preassembly and final assembly positions.

3. An indicator according to claim 1, **characterized in that** said guides consist of transverse grooves (20) having the pins (14) of the lens (2) from one of its longitudinal edges, and of ribs (21) projecting from the inner surface of the casing, parallel to the closed base thereof, which grooves are located in a position facing the ribs when the pins (14) reach the maximum introduction position through the grooves (15) of said base.

## Patentansprüche

1. Äussere Lichtanzeige für eine dritte Bremsleuchte für Kraftfahrzeuge, dazu bestimmt, in einer hinteren Öffnung des Karrosserieblechs montiert zu werden, umfassend ein längliches Gehäuse (1), das an einer seiner Flächen offen und an der gegenüberliegenden Fläche geschlossen ist, wobei ein Streifen (3) der einen Satz LEDs (4) aufweist durch die offene Fläche montiert wird, wobei die Lichtscheibe (2) auf der geschlossenen Fläche montiert wird, einen längeren Umriss hat als das Gehäuse und an der Innenfläche eine Reihe Stifte (14) aufweist, wobei die äussere Lichtanzeige **dadurch gekennzeichnet ist, dass** die Stifte (14) durch gegenüberliegende Nuten (15), die die geschlossene Fläche (6) des Gehäuses (1) aufweist, gesteckt werden können, wobei besagte Nuten länger sind als die Stifte breit sind; wobei die Stifte (14) und die Längswände (5) des Gehäuses mindestens zwei Paare Bolzen (17,19 und 16,18) und ein Paar Führungen (20,21) aufweisen; wobei ein erstes Bolzenpaar (17,19) an der Vormontageposition teilhat, in der die Lichtscheibe (2) teilweise vom Gehäuse getrennt ist, und ein zweites Bolzenpaar (16,18) und die Führungen (20,21) an der Endmontageposition des Fahrzeugs teilhaben, in der die Kante der Öffnung des Karrosserieblechs, auf der die Montage stattfindet, zwischen das Gehäuse und die Lichtscheibe gepresst werden soll;
wobei die erste Vormontageposition erreicht wird durch die teilweise Einführung der Stifte (14) der Lichtscheibe durch die Nuten (15) der geschlossenen Fläche des Gehäuses, bis eine Verrastung zwischen dem gegenüberliegenden ersten Bolzenpaar (17,19) der Stifte und der Gehäusewand erzielt wird,
und die Endposition der Bolzen durch das vollständige Einführen der Stifte durch die Nuten der geschlossenen Fläche des Gehäuses erreicht wird, bis der Stift und die Führungen (20,21) einander gegenüberliegen, gefolgt von einem Längsgleiten zwischen der Lichtscheibe und dem Gehäuse, bis die vollständige Kupplung zwischen den beiden Führungen erreicht wird, während gleichzeitig eine Verrastung zwischen den gegenüberliegenden Bolzen des zweiten Bolzenpaars (16,18) erreicht wird.

2. Anzeige gemäss Anspruch 1, **dadurch gekennzeichnet, dass** besagte Bolzen aus gegenüberliegenden Vorsprüngen (18,19) und Vertiefungen oder Öffnungen (16,17) bestehen, die die Stifte (14) der Lichtscheibe (2) und die Wände (5) des Gehäuses (1) an ihren gegenüberliegenden Flächen aufweisen, die sich an übereinstimmenden Punkten befinden, wenn besagte Lichtscheibe und das Gehäuse ihre Positionen der Vormontage und Endmontage einnehmen.

3. Anzeige gemäss Anspruch 1, **dadurch gekennzeichnet, dass** besagte Führungen aus Quernuten (20) bestehen, die die Stifte (14) der Lichtscheibe (2) an einer ihrer Längskanten aufweisen, und aus Rippen (21), die von der Innenfläche des Gehäuses,parallel zur geschlossenen Fläche desselben, vorstehen, wobei sich diese Nuten in einer den Rippen gegenüberliegenden Position befinden, wenn die Stifte (14) die maximale Position ihrer Einführung durch die Nuten (15) besagter Fläche erreichen.

## Revendications

1. Voyant externe pour troisième feu stop sur les voitures destiné à être monté sur une ouverture arrière de la tôle de la carrosserie, comprenant un boîtier allongé (1) ouvert sur une de leurs bases et à proximité de la base opposée dans le quel une bande (3) portant une série de diodes électroluminescentes (4) est montée à travers la base ouverte, tandis que la lentille (2) montée sur l'embase fermée et présente un profil plus grand que le boîtier et présente, des la surface intérieure, une série de goupilles (14), l'indicateur de lumière externe étant **caractérisé en ce que** les goupilles (14) sont capables d' être insérés à travers des fentes opposées (15) dans le fond fermé (6) du boîtier (1), lesdites fentes ayant une longueur qui dépasse la largeur des goupilles, ayant lesdites goupilles (14) et les parois longitudinales (5) du boîtier au moins deux paires de points d'ancrage (17, 19 , 16, 18) et une paire de guides (20, 21), un premier paire d'ancrages (17, 19) impliqués dans la position de pré- assemblage dans laquelle la lentille (2) est partiellement séparée du boîtier une seconde paire d'ancrages (16, 18) et les guides (20, 21) dans la position finale de montage dans le véhicule, dans laquelle le bord d'ouverture de la carrosserie dans lequel est monté est destiné à être serré entre le boîtier et la lentille; pour atteindre la première position de pré-assemblage par l'introduction partielle des goupilles (14) de la lentille a travers des rainures (15) de la base fermée du boîtier pour le blocage entre la première paire d'ancrages (17, 19) des goupilles et la paroi du boîtier et l'ancrage de la position d'extrémité par l'insertion complète des goupilles à travers les fentes de la base de fermeture du boîtier jusqu'à ce que les goupilles et les guides (20, 21) du boîtier sont en opposition, suivie par coulissement longitudinal entre l' lentille et le boîtier pour réaliser un couplage complet entre les deux guides, tout en atteignant une position de blocage entre les points d'ancrage opposés de la seconde paire d'ancrages (16, 18).

2. Indicateur selon la revendication 1, **caractérisé en ce que** lesdits ancrages se composent de saillies opposées (18, 19) et des évidements ou des ouvertures (16, 17) ayant des goupilles (14) de la lentille (2) et les parois (5) d'boîtier (1) sur ses faces opposées, étant positionnée dans des points coïncidents lorsque ladite lentille et le boîtier atteignent leurs positions de pre-assemblage et de montage final.

3. Indicateur selon la revendication 1, **caractérisé en ce que** lesdites guides sont constitués de fentes transversales (20) ayant des goupilles (14) de la lentille (2) à partir de l'un de ses bords longitudinaux et des nervures (21) faisant saillie à partir de la surface intérieure du boîtier, parallèlement à sa base fermée, lesquelles fentes sont situées dans une position dirigée vers les nerfs lorsque les goupilles (14) atteignent la position d'insertion maximale à travers les fentes (15) de ladite base.
